# EUROPEAN PATENT APPLICATION

(11) **EP 4 808 063 A1**
(43) Date of publication of application: **16.09.2026**
(21) Application number: 26164345.6
(22) Date of filing: 12.03.2026
(51) Int. Cl.: H04L 41/0631, H04L 12/28, H04L 41/0677, H04L 43/022, G01R 31/08, H04B 10/079, H04L 41/16

(54) **COMMUNCATIONS CHANNEL IMPAIRMENT DETECTION SYSTEM**

(30) Priority: 14.03.2025 US 202519080730
(71) Applicant: Avago Technologies International Sales Pte. Limited, Singapore 768923 (SG)
(72) Inventor: Li, Gordon Yong, San Diego, 92127 (US); Katre, Prashant, San Diego, 92127 (US); Wheeler, Brian Anthony, Duluth, 30096 (US); Joshi, Robindra B., Irvine, 92618 (US); Brawner, Keith Warren, Irvine, 92618 (US); Hall, Laura Cox, Irvine, 92618 (US); Perlow, Randall Bret, Irvine, 92618 (US)
(74) Representative: Dilg, Haeusler, Schindelmann Patentanwaltsgesellschaft mbH

(57) **Abstract**

An electronic device includes a network interface configured to communicate data signals via channels on a network, computer-readable storage media storing sequences of instructions, and processing circuitry configured to execute the sequences of instructions to perform operations. The operations may include sampling the data signals communicated via the network interface, determining attributes of the channels based on a first set of data signal samples, normalizing a second set of data signal samples based on the determined attributes of the channels, processing the normalized second set of data signal samples using a machine learning model to generate an indication of impairment in the channels, determining, based on the indication, characteristics of the impairment in the channels, and generating and transmitting a notification comprising the determined characteristics of the impairment to a controller via the network interface.

## Description

### TECHNICAL FIELD

The present description relates in general to broadband communications networks including, for example, the channels used to communicate data in broadband communications networks.

### BACKGROUND

Service providers often use broadband communications networks to deliver services such as Internet access, video content, telephony, gaming, etc. to subscribing users. Data associated with these services may be communicated between devices on the networks using channels having assigned frequency bands for transmitting data encoded on signals within the bands. However, the channels are inherently prone to impairments from interference that may be introduced anywhere within the network. The impairments may slow or even prevent the successful transmission of data between devices across a network and are a significant source of subscriber complaints and service provider maintenance costs. Traditionally, the detection and mitigation of channel impairments was ad hoc and often included trial-and-error approaches that could be both time and cost-intensive.

### BRIEF DESCRIPTION OF THE DRAWINGS

Certain features of the subject technology are set forth in the appended claims. However, for purposes of explanation, several aspects of the subject technology are set forth in the following figures.
FIG. 1 illustrates an example of a network environment in which aspects of the subject technology may be implemented.
FIG. 2 is a block diagram illustrating components of an edge device according to aspects of the subject technology.
FIG. 3 is a flowchart illustrating an example workflow of the channel impairment detection system according to aspects of the subject technology.
FIG. 4A depicts a graph illustrating a channel envelope, FIG. 4B depicts a graph illustrating a noise floor together with the channel envelope, and FIG. 4C depicts a graph illustrating a configuration of upstream channels according to aspects of the subject technology.
FIG. 5 is a flowchart illustrating aspects of a process for detecting anomalies in data signal samples that may indicate channel impairments according to aspects of the subject technology.
FIG. 6 is a graph illustrating the segmentation of data signal samples according to aspects of the subject technology.
FIG. 7 is a graph illustrating impairment characteristics according to aspects of the subject technology.
FIG. 8 is a graph illustrating the analysis of two channel impairments according to aspects of the subject technology.

### DETAILED DESCRIPTION

The detailed description set forth below is intended as a description of various configurations of the subject technology and is not intended to represent the only configurations in which the subject technology may be practiced. The appended drawings are incorporated herein and constitute part of the detailed description. The detailed description includes specific details for providing a thorough understanding of the subject technology. However, the subject technology is not limited to the specific details set forth herein and may be practiced without one or more of the specific details. In some instances, structures and components are shown in a block-diagram form to avoid obscuring the concepts of the subject technology.

The subject technology proposes a systematic and unified approach to detecting and analyzing channel impairments in broadband communications networks. In particular, the subject technology leverages hardware and software capabilities available in edge devices across the network to detect and report channel impairments to the service provider. For example, edge devices may be configured to systematically sample incoming (downstream) and/or outgoing (upstream) data signals and process the data signal samples to efficiently and effectively detect channel impairments. Data signal samples may be used to determine attributes of the channels such as signal envelopes and noise floors from the perspective of the edge device allowing for a localized calibration/normalization of the data signal samples prior to further processing. The edge devices may utilize on-device machine learning capabilities to process the data signal samples to identify anomalies in the channels which may indicate channel impairments being experienced at the edge device. Once an anomaly has been identified, characteristics of the associated channel impairments such as center frequency, amplitude, bandwidth, etc., may be determined by the edge device and reported to a server or controller of the service provider.

Accordingly, the subject technology provides an effective and efficient system for detecting and reporting channel impairments. Executing channel impairment detection on the edge devices rather than centrally on a service provider's server/controller reduces the demands of this functionality on network bandwidth, server storage, and server processing capabilities reducing delays in detecting channel impairments and shortening response times of the service provider in addressing the channel impairments. Furthermore, the utilization of machine-learning models on the edge devices allows the edge devices to effectively use data signal samples rather than entire data signals in the detection of channel impairments thereby minimizing hardware and processing demands of this functionality. These features and benefits, as well as other features and benefits, are described in further detail below.

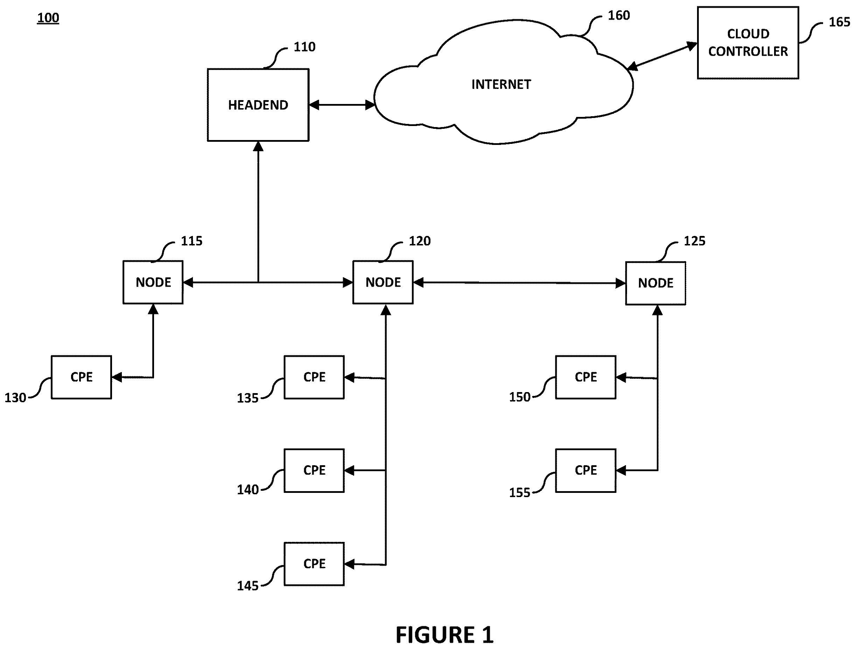

FIG. 1 illustrates an example of network environment 100 in which aspects of the subject technology may be implemented. Not all of the depicted components may be required, however, and one or more implementations may include additional components not shown in the figure. Variations in the arrangement and type of the components may be made without departing from the spirit or scope of the claims as set forth herein. Depicted or described connections and couplings between components (including electrical and communicative connections and couplings) are not limited to direct connections or direct couplings and may be implemented with one or more intervening components unless expressly stated otherwise.

The example network environment 100 includes headend system 110 forming a broadband communications network with customer premises equipment (CPE) 130-155 interconnected via nodes 115-125. Headend system 110 represents an access point to the broadband communications network to provide services to customers via the network. Headend system 110 may include receivers, transmitters, modems, signal processors, routers, servers, etc. configured to receive data from sources outside of the broadband communications network for services such as Internet access, video content, telephony, gaming, etc., and process the data for transmission to one or more of CPEs 130-155 via the broadband communications network. Similarly, headend system 110 is further configured to receive data from one or more of CPEs 130-155 and process the data for transmission to external sources providing the services associated with the data or to other destinations outside of the broadband communications network. The subject technology is not limited to any particular types or numbers of services being provided via the broadband communications network.

CPEs 130-155 represent edge devices on a broadband communications network that provide a bridge between the broadband communications network and devices or systems operating at the customer's premises. For example, CPEs 130-155 may be implemented as a cable modem that bridges between a local area network (LAN) on the customer's premises and the broadband communications network. In this example, the cable modem communicates data signals via the broadband communications network using a standard or protocol such as Data Over Cable Service Interface Specifications (DOCSIS) and communicates data encoded on the data signals with devices on the LAN using a standard or protocol such as Ethernet. The subject technology is not limited to cable modems as edge devices and may be implemented using other types of devices such as set-top boxes.

According to aspects of the subject technology, the broadband communications network may be implemented as a cable broadband network using coaxial cables as transmission media. Alternatively, the broadband communications network may be implemented as an optical network (e.g., passive optical network (PON)) using optical fibers as transmission media. In other configurations, the broadband communications network may be implemented as a hybrid fiber coaxial (HFC) network using both coaxial cables and optical fibers as transmission media. For example, headend system 110 and nodes 115-125 may communicate with each other via optical fiber connections, while nodes 115-125 and CPEs 130-155 communicate with each other via coaxial cable connections. Nodes 115-125, which represent hardware network devices configured to facilitate the distribution and transmission of data signals across the broadband communications network by splitting, amplifying, and/or routing the data signals, may be configured to convert data signals received via one type of transmission media (e.g., fiber) to data signals for transmission to a next hop in the network via another type of transmission media (e.g., coaxial cable) in HFC networks.

Cloud controller 165 in FIG. 1 represents a server or group of servers configured to receive communications from devices on the broadband communications network via Internet 160 and process the communications in support of channel impairment detection operations described herein. As described in more detail below, upon detecting a channel impairment the detecting edge device sends a notification with information on the detected channel impairment. Cloud controller 165 may be configured to receive and process these notifications from across the broadband communications network both to inform the service provider of the channel impairments and to assist in locating the sources of the channel impairments based on which edge devices provided the notifications. In this regard, cloud controller 165 may perform clustering analysis of the received notifications using machine learning algorithms such as centroid-based clustering, hierarchical clustering, etc. to locate the impairment sources within the broadband communications network and provide information on the severity and impact are of the channel impairment. Parts or all of this functionality also may be executed with headend system 110.

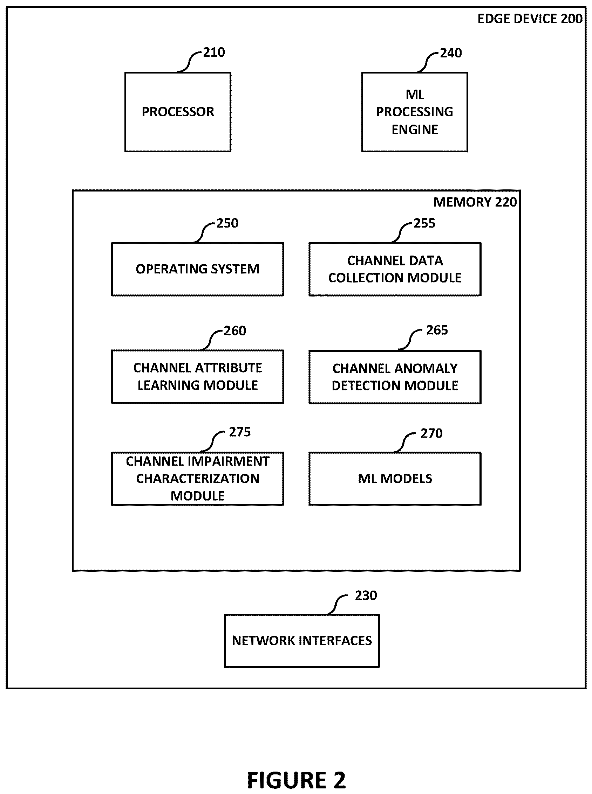

FIG. 2 is a block diagram illustrating components of an edge device according to aspects of the subject technology. Not all of the depicted components may be required, however, and one or more implementations may include additional components not shown in the figure. Variations in the arrangement and type of the components may be made without departing from the spirit or scope of the claims as set forth herein. Depicted or described connections and couplings between components (including electrical and communicative connections and couplings) are not limited to direct connections or direct couplings and may be implemented with one or more intervening components unless expressly stated otherwise.

As depicted in FIG. 2, edge device 200 includes processor 210, memory 220, network interfaces 230, and machine learning (ML) processing engine 240. The components of edge device 200 may be implemented in a system-on-chip (SoC) device. Alternatively, a subset of the components of edge device 200 may be implemented in a SoC device, with the remaining components implemented in individual devices.

Processor 210 (e.g., processing circuitry) may include suitable logic and circuitry to load and execute code to enable processing data and/or controlling operations of edge device 200. The functionality and operations of edge device 200 described herein may be implemented using software/firmware (e.g., instructions, code, subroutines, etc.) that is loaded and executed by processor 210 to provide the functionality and operations. In this regard, processor 210 may be configured to provide control signals to various other components of edge device 200. Processor 210 also may be configured to control the transfer of data between components within edge device 200 and between edge device 200 and other devices or systems outside of edge device 200. Processor 210 may be implemented using circuitry such as Application Specific Integrated Circuits (ASIC), Field Programmable Gate Arrays (FPGA), Programmable Logic Devices (PLD), controllers, state machines, gated logic, discrete hardware components, or any other suitable devices.

According to aspects of the subject technology, memory 220 may include suitable logic, circuitry, and/or code that enable storage of various types of data and information such as received data, generated data, code, and/or configuration information. Memory 220 may include, for example, random access memory (RAM), read-only memory (ROM), flash memory, etc. Memory 220 may include multiple types of memory such as volatile memory and non-volatile memory. As depicted in FIG. 2, memory 220 contains operating system 250, channel data collection module 255, channel attribute learning module 260, channel anomaly detection module 265, ML models 270, and channel impairment characterization module 275, which are described further below.

According to aspects of the subject technology, network interfaces 230 may include suitable circuitry, logic, and/or code that enable the communication of data with edge device 200. Network interfaces 230 also may include structural elements to facilitate physical coupling of edge device 200 with transmission media to provide for the transmission and reception of electrical and/or optical signals encoded with data over the transmission media. Network interfaces 230 may include interfaces for each type of network and associated protocols in communication with edge device 200 such as an Ethernet and/or WiFi (IEEE 802.11) interface for communications over a LAN on the customer's premises and a DOCSIS interface for communications over a broadband communications network.

According to aspects of the subject technology, ML processing engine 240 (e.g., neural processing unit) may include suitable logic, circuitry, and/or code that is configurable to execute ML models to perform inferences on sets of input data. ML processing engine 240 may operate as a hardware accelerator where the logic and circuitry of ML processing engine 240 may be configured as a framework for implementing different ML models using the associated model parameter sets. ML processing engine 240 may be implemented using circuitry such as Application Specific Integrated Circuits (ASIC), Field Programmable Gate Arrays (FPGA), Programmable Logic Devices (PLD), controllers, state machines, gated logic, discrete hardware components, or any other suitable devices.

As depicted in FIG. 2, memory 220 contains a number of components for implementing the functionality of the subject technology described herein. According to aspects of the subject technology, operating system 250 comprises a computer program having one or more sequences of instructions or code together with associated data and settings. Upon executing the instructions or code, by processor 210 for example, one or more processes are initiated to manage the resources and operations of edge device 200 to implement the processes described herein.

According to aspects of the subject technology, channel data collection module 255 comprises one or more computer programs having one or more sequences of instructions or code together with associated data and settings. Upon executing the instructions or code, by processor 210 for example, one or more processes may be initiated to execute operations for sampling data signals used to transmit data to and from edge device 200 via network interfaces 230. The data signal samples are accessible by other processes and components within edge device 200 for further processing.

The frequency spectrum available for transmitting data signals to and from edge device 200 may be divided into multiple channels each having an allocated frequency band within the frequency spectrum. One or more channels may be designated for downstream data communications received by a downstream receiver within network interfaces 230. Additionally, one or more channels may be designated for upstream data communications transmitted by an upstream transmitter within network interfaces 230. The processes initiated from channel data collection module 255 may trigger functionality provided by the downstream receiver and the upstream transmitter to sample the data signals being communicated by each and store the data signal samples in a buffer accessible by other processes and modules operating within edge device 200. The data signal samples may include the signal level received by the downstream receiver or transmitted by the upstream transmitter at the sampled frequency. The data signal samples also may include an indicator of the sampled frequency and/or a time stamp indicating the time of sampling.

Channel data collection module 255 may include configuration parameters used to execute the sampling processes described herein. The configuration parameters may include a frequency resolution at which the data signals are sampled. For example, data signals may be sampled every 60 kHz across the frequency spectrum. The subject technology is not limited to this resolution and may sample the data signals at resolutions less than or greater than 60 kHz. The configuration parameters also may include timing parameters for sampling. For example, sampling may occur every 10 seconds, 20 seconds, 5 minutes, or any other amount of time set by an administrator. The overall performance of edge device 200 may be taken into account when setting these parameters as sampling the data signals consumes resources such as processing time and memory bandwidth that might otherwise be available for other operations within edge device 200.

According to aspects of the subject technology, channel attribute learning module 260 comprises one or more computer programs having one or more sequences of instructions or code together with associated data and settings. Upon executing the instructions or code, by processor 210 for example, one or more processes may be initiated to execute operations for learning/determining attributes of the channels used to communicate data signals to and from edge device 200. The attributes of the channels may include, but are not limited to, frequency plans specifying the bandwidth of the channels, the locations within the frequency spectrum of the channels, whether the channels are upstream or downstream channels, and/or the channel type (e.g., quadrature amplitude modulation (QAM), orthogonal frequency-division multiplexing (OFDM), full duplex (FDX), or frequency division multiplexing (FDD)). Alternatively, frequency plans may be sent and stored in edge device 200 by a system administrator.

Other channel attributes may include signal envelopes and noise floors associated with the channels. According to aspects of the subject technology, network interfaces 230 may include peak-hold circuitry configured to capture peak data signal levels sampled across the frequency spectrum used for the channels, and minimum-hold circuitry configured to capture minimum data signal levels sampled across the frequency spectrum used for the channels. Executing peak-hold operations over a period of time using the peak-hold circuitry reveals a signal envelope representing channel signal patterns across the frequency spectrum expected under normal operating conditions of edge device 200. Similarly, executing minimum-hold operations over a period of time using the minimum-hold circuitry reveals a noise floor representing noise levels across the frequency spectrum expected under normal operating conditions of edge device 200. These operations reveal signal envelopes and noise floors for both bursty channels (e.g., upstream channels) as well as continuous channels (e.g., downstream channels).

The subject technology is not limited to any particular period of time (e.g., one minute, ten minutes, one hour, etc.) for executing the peak-hold operations and/or the minimum-hold operations. The period of time may be a configuration parameter set based on expected and/or observed activity levels on the channels. Additionally, the period of time used for the peak-hold operations may be different than the period of time used for the minimum-hold operations. The signal envelopes and the noise floors may be set using the peak signal levels and the minimum signal levels captured across the frequency spectrum after the period of time has elapsed. Alternatively, the subject technology may set the signal envelopes and the noise floors using an average of the peak signal levels and an average of the minimum signal levels captured over a single period of time or an average of the results of multiple rounds (e.g., multiple periods of time) of executing the peak-hold operations and minimum-hold operations across the frequency spectrum. Additionally, a buffer value may be set to add to or subtract from the captured peak signal levels and the captured minimum signal levels when setting the signal envelopes and the noise floors.

According to aspects of the subject technology, channel anomaly detection module 265 comprises one or more computer programs having one or more sequences of instructions or code together with associated data and settings. Upon executing the instructions or code, by processor 210 for example, one or more processes may be initiated to execute operations for detecting anomalies in the channels by processing the data signal samples using machine learning models trained to generate inferences that indicate the presence of anomalies in the data signal samples that may be an indication of channel impairment.

ML models may be represented by mathematical algorithms/operations that generate inference results from input data. ML models may be defined with a set of parameters that specifies configuration variables of the ML model (e.g., model network, algorithm variables, weights, coefficients, etc.) and may specify types and formats for input data compatible with the ML model. ML models 270 depicted in FIG. 2 represents a library of parameter sets for available ML models stored in memory 220. According to aspects of the subject technology, ML models for detecting anomalies in data signal levels for upstream channels, noise levels for upstream channels, data signal levels for downstream channels, and noise levels for downstream channels may be trained and added to the library of parameter sets in ML models 270.

Processes initiated by channel anomaly detection module 265 may select a set of parameters from ML models 270 corresponding to a desired ML model. The selected set of parameters may be used to configure ML processing engine 240 to execute the desired ML model. The processes may further select and format the data signal samples to be provided as inputs to the ML model. For example, the data signal samples may be normalized based on the determined signal envelopes and noise floors. In particular, sampled signal values may be subtracted from the signal envelope values corresponding to the frequency at which the data signal was sampled to generate a normalized data signal value. Similarly, the determined noise floor values may be subtracted from the sampled noise values at the corresponding frequencies to generate a normalized noise value.

In addition to normalizing the data signal sample values, sets of data signal sample values may need to be segmented into smaller sets based on the input data capacity of the ML model being used and the processing resolution of the anomaly detection. The size of the ML model and correspondingly the size of the input data set and the output inference data set may be constrained by the hardware capabilities of edge device 200. Larger ML models may require significant processing power for the operations executed when generating an inference and also may require significant memory resources for the data involved in the operations. Anomaly detection for a channel may be performed in a single execution of the ML model when the number of data signal samples associated with the channel does not exceed the input data capacity of the ML model and when channel-level anomaly detection is being utilized. If the number of data signal samples associated with the channel exceeds the input data capacity or if sub-channel-level anomaly detection is being utilized, the data signal samples may be segmented into multiple groups or segments which will involve multiple executions of the ML model in order to complete the anomaly detection for the entire channel.

According to aspects of the subject technology, autoencoder neural network models may be used as ML models trained to detect anomalies in the channels. Autoencoder neural network models may be trained to reduce the dimensionality of an input data set through one or more encoder layers and increase the dimensionality back to the original size through one or more decoder layers. In this manner, the autoencoder neural network models output a de-noised version of the input data set. Loss functions may be used to compare de-noised output data to original input data and detect anomalies in the input data set. Detected anomalies may be indications of impairment in the channel associated with the input data set.

According to aspects of the subject technology, channel impairment characterization module 275 comprises one or more computer programs having one or more sequences of instructions or code together with associated data and settings. Upon executing the instructions or code, by processor 210 for example, one or more processes may be initiated to execute operations for characterizing channel impairments indicated by outputs of the ML models used to detect anomalies in the data signal samples. A channel impairment may be characterized using features such as center frequency, amplitude, and/or bandwidth that may be determined using the data signal samples associated with the channel together with the signal envelope and noise floor determined for the channel.

Channel impairment characterization module 275 may initiate processes to generate a notification regarding the detected channel impairment and to send the notification to the service provider either through cloud controller 165 and/or through headend system 110. The notification may include the determined characteristics of the channel impairment as well as an identifier of the edge device. Using this notification either alone or in combination with other notifications generated by other edge devices, the source of the noise or interference causing the channel impairment may be localized within the broadband communications network. With this information, a service provider may be able to more quickly and effectively dispatch resources to address the channel impairment.

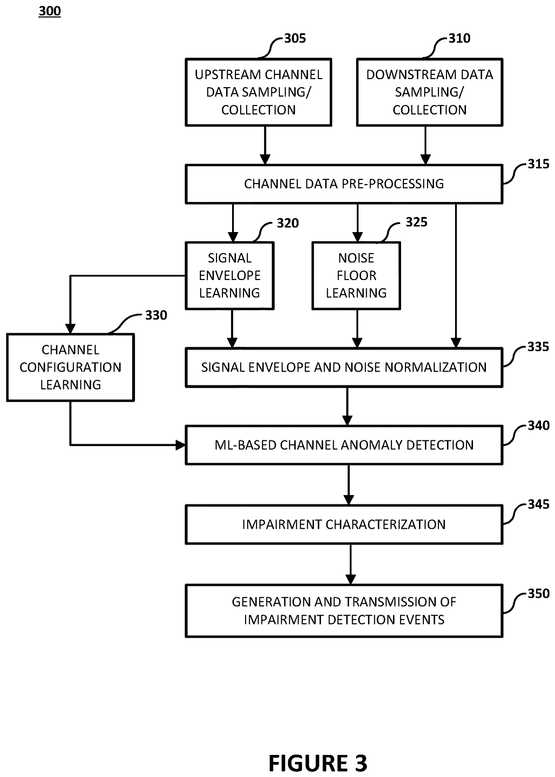

FIG. 3 is a flowchart illustrating an example workflow of the channel impairment detection system according to aspects of the subject technology. For explanatory purposes, the blocks of the illustrated process may be described herein as occurring in serial or linearly. However, two or more blocks of the illustrated process may be performed in parallel. In addition, the blocks depicted in FIG. 3 may be performed in a different order from that shown and the process may not perform one or more of the illustrated blocks and/or may include one or more additional blocks.

Processing workflow 300 depicted in FIG. 3 includes sampling and collecting upstream channel data signal samples (block 305) and downstream channel data signal samples (block 310). The collected data signal samples may require pre-processing (block 315) before the workflow continues. For example, the size and/or resolution of the values may need to be changed to conform to any preferred data formats of other components in the system.

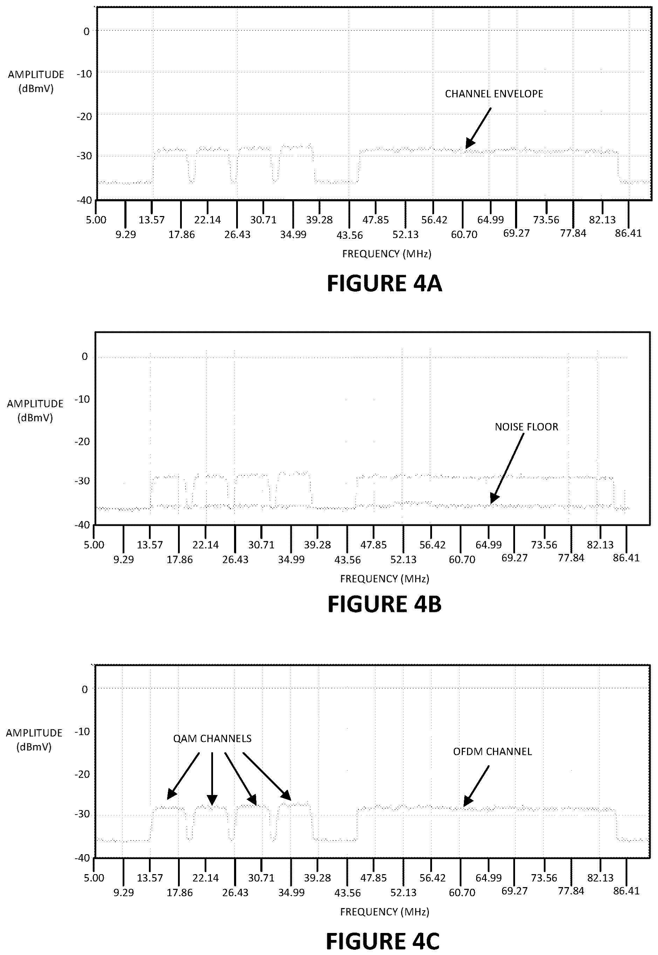

As noted above, data signal samples may be used to determine a signal envelope (block 320) and a noise floor (block 325) for the channel(s) associated with the data signal samples. FIG. 4A depicts a graph illustrating a channel envelope and FIG. 4B depicts a graph illustrating a noise floor together with the channel envelope according to aspects of the subject technology. In addition, data signal samples may be used to determine a frequency plan for the channel configuration (block 330) in the absence of the service provider providing the frequency plan for the channels. FIG. 4C depicts a graph illustrating a portion of an upstream channel configuration or frequency plan which includes four quadrature amplitude modulation (QAM) channels and one orthogonal frequency division multiple access (OFDMA) channel. The signal envelope, noise floor, and frequency plan represent examples of attributes of the channels. The subject technology is not limited to these attributes and may utilize other attributes.

Using the determined signal envelope and the determined noise floor, data signal samples may be normalized prior to being provided as inputs for anomaly detection (block 335). As noted above, sampled signal values may be subtracted from the signal envelope values corresponding to the frequency at which the data signal was sampled to generate a normalized data signal value. Similarly, the determined noise floor values may be subtracted from the sampled noise values at the corresponding frequencies to generate a normalized noise value. The normalized signal and noise values may then be used as inputs for the ML-based channel anomaly detection (block 340).

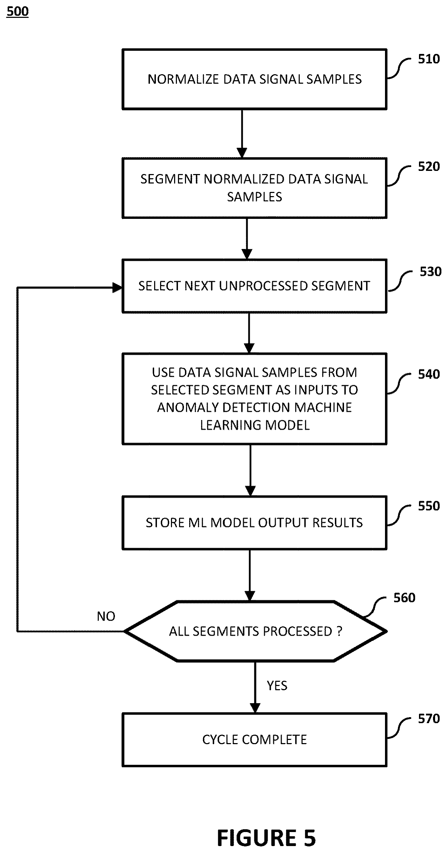

FIG. 5 is a flowchart illustrating aspects of a process for detecting anomalies in data signal samples that may indicate channel impairments according to aspects of the subject technology. For explanatory purposes, the blocks of the illustrated process may be described herein as occurring in serial or linearly. However, two or more blocks of the illustrated process may be performed in parallel. In addition, the blocks depicted in FIG. 5 may be performed in a different order from that shown and the process may not perform one or more of the illustrated blocks and/or may include one or more additional blocks.

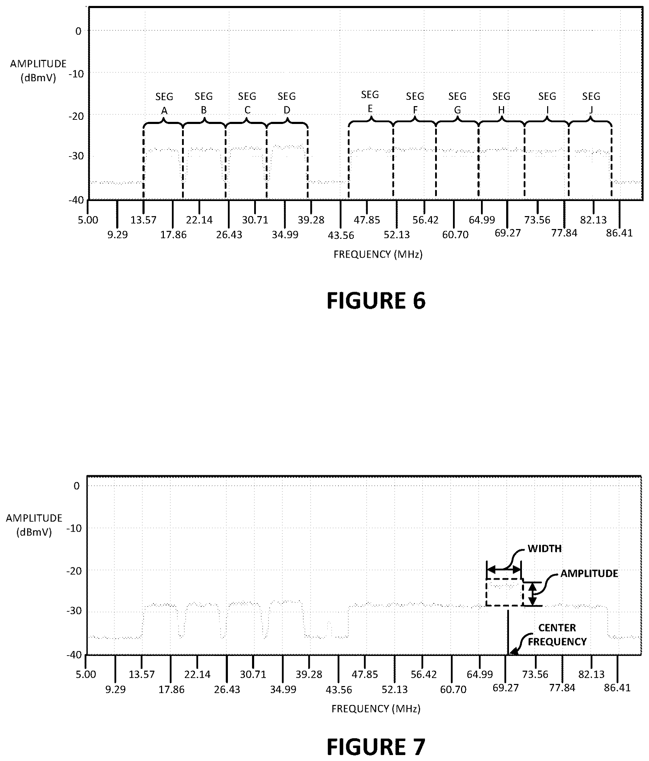

As depicted in FIG. 5, process 500 includes normalizing the data signal samples as discussed above (block 510) and segmenting the normalized data signal samples according to the input data capacity of the ML model being used and/or any required processing resolution (block 520). FIG. 6 is a graph illustrating the segmentation of data signal samples according to aspects of the subject technology. As depicted in FIG. 6, the sampled signal values associated with the four smaller QAM channels fit within respective segments of segments A, B, C, and D. The sampled signal values associated with the larger OFDMA channel are shown as being segmented into 6 segments, segments E, F, G, H, I, and J.

Returning to FIG. 5, the next unprocessed segment of data signal samples is selected (block 530) and used as inputs to the machine learning model selected for anomaly detection (block 540). For example, segment E in FIG. 6 may be selected as the first segment to be used for input data to the ML model. The inference output of the ML model indicating the presence of any anomalies in the data signal samples may be stored in a memory (block 550) while any remaining segments of data signal samples are processed. If it is determined that unprocessed segments remain (block 560), the next unprocessed segment is selected (block 520) and processed. If all segments have been processed, the anomaly detection cycle is complete (block 570) and the set of inference outputs generated from the segment of data signal samples may collectively indicate the presence of an anomaly in the channel.

With reference to FIG. 3, the data signal samples associated with a channel that has been identified as containing an anomaly are used to characterize the channel impairment triggered by the anomaly (block 345). FIG. 7 is a graph illustrating impairment characteristics according to aspects of the subject technology. As depicted in FIG. 7, data signal values may be used to characterize the impairment represented by the data signal values that exceed the signal envelope. The characteristics include, but are not limited to, a center frequency of the impairment, an amplitude of the impairment, and a frequency bandwidth of the impairment. The impairment characteristics may be used by a service provider to locate and mitigate the source of the impairment and may be included in a notification message generated and transmitted by the detecting edge device to the service provider (e.g., cloud controller and/or headend) (block 350).

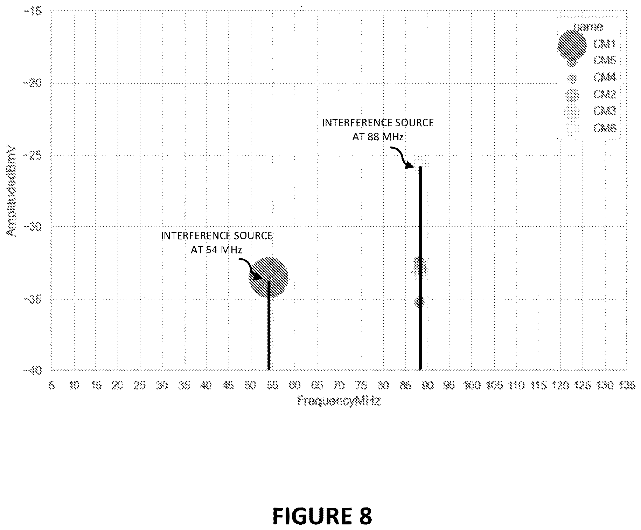

FIG. 8 is a graph illustrating the analysis of two channel impairments according to aspects of the subject technology. The graph includes representations of two channel impairments. The first channel impairment has a center frequency at 54 MHz and an amplitude of approximately -34 dB mV. The second channel impairment has a center frequency at 88 MHz and an amplitude of approximately -26 dB mV. Also depicted in FIG. 8 are representations of the edge devices (CM1, CM2, CM3, CM4, CM5, and CM6) that detected and reported the channel impairments. This information may be used for localization of the channel impairment to facilitate the quick resolution of the interference causing the impairment. For example, CM1 is shown as the only edge device that detected the impairment at 54 MHz and therefore attention may be focused on possible sources of interference at or near CM1 within the broadband communications network. However, CM2-CM6 are shown in FIG. 8 as all detecting the impairment at 88 MHz at different amplitudes. In this example, CM6 reported the largest amplitude and therefore attention may be focused on possible sources of interference at or near CM6 within the broadband communications network.

According to aspects of the subject technology, an electronic device is provided that includes a network interface configured to communicate data signals via one or more channels on a network; computer-readable storage media storing one or more sequences of instructions; and processing circuitry configured to execute the one or more sequences of instructions to perform operations. The operations include sampling the data signals communicated via the network interface; determining attributes of the one or more channels based on a first set of data signal samples; normalizing a second set of data signal samples based on the determined attributes of the one or more channels; processing the normalized second set of data signal samples using a machine learning model to generate an indication of impairment in the one or more channels; determining, based on the indication, one or more characteristics of the impairment in the one or more channels; and generating and transmitting a notification comprising the determined one or more characteristics of the impairment to a controller via the network interface.

The one or more channels may include a downstream channel configured to receive data signals via the network and an upstream channel configured to transmit data signals via the network. The attributes of the one or more channels may include a signal envelope and a noise floor. The signal envelope may be determined by executing a peak-hold operation to capture peak signal levels of the data signals sampled across a frequency range of the one or more channels over a period of time; and setting the signal envelope of the one or more channels using the captured peak signal levels. Determining the noise floor of the one or more channels may include executing a minimum hold operation to capture minimum signal levels of the data signals sampled across the frequency range of the one or more channels over the period of time; and setting the noise floor of the one or more channels using the captured minimum signal levels.

Normalizing the second set of data signal samples may include subtracting sampled signal levels of the data signal samples from the determined signal envelope and subtracting the determined noise floor from noise levels of the data signal samples. The machine learning model comprises an autoencoder neural network model. The one or more characteristics of the impairment in the one or more channels may include at least one of a center frequency, an amplitude, or a frequency band width.

According to aspects of the subject technology, a method is provided that includes sampling, at a first device, data signals communicated with the first device via one or more channels on a network; determining attributes comprising a signal envelope and a noise floor of the one or more channels at the first device based on a first set of data signal samples; normalizing a second set of data signal samples based on the determined attributes of the one or more channels; processing the normalized second set of data signal samples at the first device using a machine learning model to generate an indication of impairment in the one or more channels; determining, based on the indication, one or more characteristics of the impairment in the one or more channels; and generating and transmitting a notification comprising the determined one or more characteristics of the impairment to a second device via the one or more channels on the network.

The one or more channels may include a downstream channel configured for the first device to receive data signals via the network and an upstream channel configured for the first device to transmit data signals via the network. Determining the signal envelope of the one or more channels may include executing a peak-hold operation to capture peak signal levels of the data signals sampled across a frequency range of the one or more channels over a period of time; and setting the signal envelope of the one or more channels using the captured peak signal levels. Determining the noise floor of the one or more channels may include executing a minimum hold operation to capture minimum signal levels of the data signals sampled across the frequency range of the one or more channels over the period of time; and setting the noise floor of the one or more channels using the captured minimum signal. Normalizing the second set of data signal samples may include subtracting sampled signal levels of the data signal samples from the determined signal envelope and subtracting the determined noise floor from noise levels of the data signal samples. The machine learning model may comprise an autoencoder neural network model. The one or more characteristics of the impairment in the one or more channels may include at least one of a center frequency, an amplitude, or a frequency band width.

According to aspects of the subject technology, an electronic device is provided that includes a network interface configured to receive data signals via one or more downstream channels on a network and to transmit data signals via one or more upstream channels on the network; a machine learning processing engine configured to execute an autoencoder neural network model; computer-readable storage media storing one or more sequences of instructions; and processing circuitry configured to execute the one or more sequences of instructions to perform operations comprising: sampling the data signals communicated via the network interface; determining attributes comprising a signal envelope and a noise floor of the one or more channels based on a first set of data signal samples; normalizing a second set of data signal samples based on the determined attributes of the one or more channels; providing the normalized second set of data signal samples to the machine learning processing engine and receiving an indication of impairment in the one or more channels from the machine learning processing engine; determining, based on the indication, one or more characteristics of the impairment in the one or more channels; and generating and transmitting a notification comprising the determined one or more characteristics of the impairment to a controller via the network interface.

Determining the signal envelope of the one or more channels may include executing a peak-hold operation to capture peak signal levels of the data signals sampled across a frequency range of the one or more channels over a period of time; and setting the signal envelope for the one or more channels using the captured peak signal. Determining the noise floor of the one or more channels may include executing a minimum hold operation to capture minimum signal levels of the data signals sampled across the frequency range of the one or more channels over the period of time; and setting the noise floor of the one or more channels using the captured minimum signal levels.

Normalizing the second set of data signal samples, may include subtracting sampled signal levels of the data signal samples from the determined signal envelope and subtracting the determined noise floor from noise levels of the data signal samples. The electronic device of claim 16, wherein the one or more characteristics of the impairment in the one or more channels includes at least one of a center frequency, an amplitude, or a frequency band width.

Implementations within the scope of the present disclosure can be partially or entirely realized using a tangible computer-readable storage medium (or multiple tangible computer-readable storage media of one or more types) encoding one or more instructions. The tangible computer-readable storage medium also can be non-transitory in nature.

The computer-readable storage medium can be any storage medium that can be read, written, or otherwise accessed by a general purpose or special purpose computing device, including any processing electronics and/or processing circuitry capable of executing instructions. For example, without limitation, the computer-readable medium can include any volatile semiconductor memory, such as RAM, DRAM, SRAM, T-RAM, Z-RAM, and TTRAM. The computer-readable medium also can include any non-volatile semiconductor memory, such as ROM, PROM, EPROM, EEPROM, NVRAM, flash, nvSRAM, FeRAM, FeTRAM, MRAM, PRAM, CBRAM, SONOS, RRAM, NRAM, racetrack memory, FJG, and Millipede memory.

Further, the computer-readable storage medium can include any non-semiconductor memory, such as optical disk storage, magnetic disk storage, magnetic tape, other magnetic storage devices, or any other medium capable of storing one or more instructions. In some implementations, the tangible computer-readable storage medium can be directly coupled to a computing device, while in other implementations, the tangible computer-readable storage medium can be indirectly coupled to a computing device, e.g., via one or more wired connections, one or more wireless connections, or any combination thereof.

Instructions can be directly executable or can be used to develop executable instructions. For example, instructions can be realized as executable or non-executable machine code or as instructions in a high-level language that can be compiled to produce executable or non-executable machine code. Further, instructions also can be realized as or can include data. Computer-executable instructions also can be organized in any format, including routines, subroutines, programs, data structures, objects, modules, applications, applets, functions, etc. As recognized by those of skill in the art, details including, but not limited to, the number, structure, sequence, and organization of instructions can vary significantly without varying the underlying logic, function, processing, and output.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but are to be accorded the full scope consistent with the language of the claims, wherein reference to an element in the singular is not intended to mean "one and only one" unless specifically so stated, but rather "one or more." Unless specifically stated otherwise, the term "some" refers to one or more. Pronouns in the masculine (e.g., his) include the feminine and neuter gender (e.g., her and its) and vice versa. Headings and subheadings, if any, are used for convenience only and do not limit the subject disclosure.

The predicate words "configured to", "operable to", and "programmed to" do not imply any particular tangible or intangible modification of a subject, but, rather, are intended to be used interchangeably. For example, a processor configured to monitor and control an operation or a component may also mean the processor being programmed to monitor and control the operation or the processor being operable to monitor and control the operation. Likewise, a processor configured to execute code can be construed as a processor programmed to execute code or operable to execute code.

A phrase such as an "aspect" does not imply that such aspect is essential to the subject technology or that such aspect applies to all configurations of the subject technology. A disclosure relating to an aspect may apply to all configurations, or one or more configurations. A phrase such as an aspect may refer to one or more aspects and vice versa. A phrase such as a "configuration" does not imply that such configuration is essential to the subject technology or that such configuration applies to all configurations of the subject technology. A disclosure relating to a configuration may apply to all configurations, or one or more configurations. A phrase such as a configuration may refer to one or more configurations and vice versa.

The word "example" is used herein to mean "serving as an example or illustration." Any aspect or design described herein as "example" is not necessarily to be construed as preferred or advantageous over other aspects or designs.

All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. No claim element is to be construed under the provisions of 35 U.S.C. §112(f) unless the element is expressly recited using the phrase "means for" or, in the case of a method claim, the element is recited using the phrase "step for." Furthermore, to the extent that the term "include," "have," or the like is used in the description or the claims, such term is intended to be inclusive in a manner similar to the term "comprise" as "comprise" is interpreted when employed as a transitional word in a claim.

Those of skill in the art would appreciate that the various illustrative blocks, modules, elements, components, methods, and algorithms described herein may be implemented as electronic hardware, computer software, or combinations of both. To illustrate this interchangeability of hardware and software, various illustrative blocks, modules, elements, components, methods, and algorithms have been described above generally in terms of their functionality. Whether such functionality is implemented as hardware or software depends upon the particular application and design constraints imposed on the overall system. Skilled artisans may implement the described functionality in varying ways for each particular application. Various components and blocks may be arranged differently (e.g., arranged in a different order, or partitioned in a different way), all without departing from the scope of the subject technology.

The predicate words "configured to," "operable to," and "programmed to" do not imply any particular tangible or intangible modification of a subject but, rather, are intended to be used interchangeably. For example, a processor configured to monitor and control an operation or a component may also mean the processor being programmed to monitor and control the operation or the processor being operable to monitor and control the operation. Likewise, a processor configured to execute code can be construed as a processor programmed to execute code or operable to execute code.

## Claims

1. An electronic device, comprising:
a network interface configured to communicate data signals via one or more channels on a network;
computer-readable storage media storing one or more sequences of instructions; and
processing circuitry configured to execute the one or more sequences of instructions to perform operations comprising:
sampling the data signals communicated via the network interface;
determining attributes of the one or more channels based on a first set of data signal samples;
normalizing a second set of data signal samples based on the determined attributes of the one or more channels;
processing the normalized second set of data signal samples using a machine learning model to generate an indication of impairment in the one or more channels;
determining, based on the indication, one or more characteristics of the impairment in the one or more channels; and
generating and transmitting a notification comprising the determined one or more characteristics of the impairment to a controller via the network interface.

2. The electronic device of claim 1, wherein
the one or more channels comprise a downstream channel configured to receive data signals via the network and an upstream channel configured to transmit data signals via the network.

3. The electronic device of claim 1 or 2, wherein
the attributes of the one or more channels comprise a signal envelope and a noise floor.

4. The electronic device of claim 3, wherein
determining the signal envelope of the one or more channels comprises:
executing a peak-hold operation to capture peak signal levels of the data signals sampled across a frequency range of the one or more channels over a period of time; and
setting the signal envelope of the one or more channels using the captured peak signal levels.

5. The electronic device of claim 4, wherein determining the noise floor of the one or more channels comprises
executing a minimum hold operation to capture minimum signal levels of the data signals sampled across the frequency range of the one or more channels over the period of time; and
setting the noise floor of the one or more channels using the captured minimum signal levels.

6. The electronic device of any one of the claims 3 to 5, wherein
normalizing the second set of data signal samples comprises
subtracting sampled signal levels of the data signal samples from the determined signal envelope and subtracting the determined noise floor from noise levels of the data signal samples.

7. The electronic device of any one of the claims 1 to 6, wherein
the machine learning model comprises an autoencoder neural network model.

8. The electronic device of any one of the claims 1 to 7, wherein
the one or more characteristics of the impairment in the one or more channels includes at least one of a center frequency, an amplitude, or a frequency band width.

9. A method, comprising:
sampling, at a first device, data signals communicated with the first device via one or more channels on a network;
determining attributes comprising a signal envelope and a noise floor of the one or more channels at the first device based on a first set of data signal samples;
normalizing a second set of data signal samples based on the determined attributes of the one or more channels;
processing the normalized second set of data signal samples at the first device using a machine learning model to generate an indication of impairment in the one or more channels;
determining, based on the indication, one or more characteristics of the impairment in the one or more channels; and
generating and transmitting a notification comprising the determined one or more characteristics of the impairment to a second device via the one or more channels on the network.

10. The method of claim 9, wherein
the one or more channels comprise a downstream channel configured for the first device to receive data signals via the network and an upstream channel configured for the first device to transmit data signals via the network.

11. The method of claim 9 or 10, wherein
determining the signal envelope of the one or more channels comprises:
executing a peak-hold operation to capture peak signal levels of the data signals sampled across a frequency range of the one or more channels over a period of time; and
setting the signal envelope of the one or more channels using the captured peak signal levels.

12. The method of any one of the claims 9 to 11, wherein
determining the noise floor of the one or more channels comprises:
executing a minimum hold operation to capture minimum signal levels of the data signals sampled across the frequency range of the one or more channels over the period of time; and
setting the noise floor of the one or more channels using the captured minimum signal levels.

13. The method of any one of the claims 9 to 12, further comprising at least one of the following features:
(A) normalizing the second set of data signal samples comprises
subtracting sampled signal levels of the data signal samples from the determined signal envelope and subtracting the determined noise floor from noise levels of the data signal samples;
(B) the machine learning model comprises an autoencoder neural network model;
(C) the one or more characteristics of the impairment in the one or more channels includes at least one of a center frequency, an amplitude, or a frequency band width.

14. An electronic device, comprising:
a network interface configured to receive data signals via one or more downstream channels on a network and to transmit data signals via one or more upstream channels on the network;
a machine learning processing engine configured to execute an autoencoder neural network model;
computer-readable storage media storing one or more sequences of instructions; and
processing circuitry configured to execute the one or more sequences of instructions to perform operations comprising:
sampling the data signals communicated via the network interface;
determining attributes comprising a signal envelope and a noise floor of the one or more channels based on a first set of data signal samples;
normalizing a second set of data signal samples based on the determined attributes of the one or more channels;
providing the normalized second set of data signal samples to the machine learning processing engine and receiving an indication of impairment in the one or more channels from the machine learning processing engine;
determining, based on the indication, one or more characteristics of the impairment in the one or more channels; and
generating and transmitting a notification comprising the determined one or more characteristics of the impairment to a controller via the network interface.

15. The electronic device of claim 14, further comprising at least one of the following features:
(A) determining the signal envelope of the one or more channels comprises:
executing a peak-hold operation to capture peak signal levels of the data signals sampled across a frequency range of the one or more channels over a period of time; and
setting the signal envelope of the one or more channels using the captured peak signal levels;
(B) determining the noise floor of the one or more channels comprises:
executing a minimum hold operation to capture minimum signal levels of the data signals sampled across the frequency range of the one or more channels over the period of time; and
setting the noise floor of the one or more channels using the captured minimum signal levels;
(C) normalizing the second set of data signal samples comprises
subtracting sampled signal levels of the data signal samples from the determined signal envelope and subtracting the determined noise floor from noise levels of the data signal samples; and
(D) the one or more characteristics of the impairment in the one or more channels includes at least one of a center frequency, an amplitude, or a frequency band width.
